# EUROPÄISCHE PATENTSCHRIFT

(11) **EP 1 101 904 B1**
(45) Veröffentlichungstag und Bekanntmachung des Hinweises auf die Patenterteilung: **06.04.2005**
(21) Anmeldenummer: 00123623.1
(22) Anmeldetag: 28.10.2000
(51) Int. Cl.: F01M 1/06

(54) **Kolbenmaschine und Verteilelement**
Piston machine and distributor element
Machine a piston et dispositif de distribution

(30) Priorität: 16.11.1999 DE 19954927
(43) Veröffentlichungstag der Anmeldung: 23.05.2001
(73) Patentinhaber: DEERE & COMPANY, Moline, Illinois 61265-8098 (US)
(72) Erfinder: Paty, Max, 45170 Neuville Aux Bois (FR)
(74) Vertreter: Magin, Ludwig Bernhard

(56) Entgegenhaltungen:
- DE-A- 3 403 671
- US-A- 5 520 466
- US-A- 5 533 472
- US-A- 5 896 656

## Beschreibung

Die Erfindung betrifft eine Kolbenmaschine mit einem Zylinderblock, einer in dem Zylinderblock gelagerten Kurbelwelle, zumindest einer Lagerbüchse und einem Schmiersystem, das mit der Lagerbüchse über zumindest einen ein Verteilelement aufweisenden Schmierkanal in Verbindung steht, sowie ein Verteilelement mit einem vorzugsweise innenliegenden Kanal, einer Aussparung zur Zufuhr von Schmiermittel und einem Bereich zum Eintreten in eine Lagerbüchse.

Die US-A-5,896,656 zeigt eine Schmiereinrichtung für Kolben bzw. Kolbenböden einer Kolbenmaschine bzw. eines Verbrennungsmotors. Die Zufuhr des Schmiermittels erfolgt über Schmiermittelkanäle, die die Lager bzw. Lagerbüchsen der Kurbelwelle mit Schmiermittel versorgen. Im Bereich der Kurbelwellenlager sind in dem Zylinderblock Schmiermittelkanäle vorgesehen, über die Schmiermittel zu den Kolbenböden gelangen kann. Es ist bekannt, in solchen Schmiermittelkanälen Sprühdüsen beispielsweise einzuschrauben oder einzutreiben, wie sie beispielsweise aus dem Component Technical Manual, John Deere Usine de Saran, CTM3274 (01JUL99), Seite 317 ersehen werden können, um das Schmiermittel den Kolbenböden gezielt zur Schmierung und Kühlung zuzuführen. Zusätzlich weisen solche Kurbelwellenlager Positionierhilfen, beispielsweise ersichtlich auf Seite 122 des oben genannten Component Technical Manual, in Form von Vorsprüngen bzw. Vertiefungen zur Positionierung der Lagerbüchsen in dem Kurbelwellenlager auf, die mit entsprechenden Vertiefungen bzw. Vorsprüngen an dem Zylinderblock zusammenwirken können.

Das der Erfindung zugrunde liegende Problem wird in der aufwendigen Ausführung von Kolbenmaschinen und Lagerbüchsen gesehen.

Dieses Problem wird erfindungsgemäß durch die Lehre der Patentansprüche 1 bzw. 9 gelöst, wobei in den weiteren Patentansprüchen Merkmale aufgeführt sind, die die Lösung in vorteilhafter Weise weiterentwickeln.

Auf diese Weise wird die Position der Lagerbüchse durch das Verteilelement ohne den Einsatz weiterer Positionierhilfen bestimmt. Es ist denkbar, ein solches Verteilelement zur Positionierung einer Lagerbüchse im Lager einer Pleuelstange oder einer Kurbelwelle vorzusehen. Erfindungsgemäß erfolgt die Positionierung der Lagerbüchse mit Hilfe des Verteilelements, das vorzugsweise vor der Montage der Lagerbüchse bzw. der Kurbelwelle in den Zylinderblock bzw. in eine Ausnehmung in dem Zylinderblock bzw. in den Schmierkanal eingebracht wird. Über diesen Schmierkanal und das Verteilelement kann ein Medium vorzugsweise eine Schmier- oder Kühlflüssigkeit zu der Lagerbüchse bzw. in diese eingebracht werden, vorzugsweise um in ihr umlaufende Bauteile, wie beispielsweise die Kurbelwelle und deren Lagerflächen zu schmieren oder auch zu kühlen. Die Lagerbüchse wird hierzu mit dem Verteilelement vorzugsweise in Eingriff gebracht, so daß sie sich bezogen auf den Zylinderblock nicht oder nur in vorbestimmtem Umfang verdrehen bzw. verschieben kann. Es ist aber auch vorstellbar, daß das Verteilelement die Lagerbüchse in anderer Weise positioniert, beispielsweise mit dieser verklebt bzw. heißgeklebt etc., wird.

Um dies zu erreichen, können an dem Verteilelement bzw. an der Lagerbüchse hakenartige Elemente vorgesehen sein, die ineinander eingreifen können. Besonders einfach ist es allerdings, wenn in der Lagerbüchse zumindest eine Ausnehmung bzw. eine Aussparung vorgesehen ist, in die das Verteilelement vorzugsweise dadurch eingreifen kann, daß es mit seinem gesamten Querschnitt oder bereichsweise über den Schmierkanal hinausragt. Es ist auch denkbar, daß an oder in dem Verteilelement eine Art Positionierdorn o.ä. vorgesehen ist. Vorzugsweise ist das Verteilelement aber einteilig ausgebildet. Die Aussparung/Ausnehmung in der Lagerbüchse kann als eine Vertiefung vorgesehen sein, die in ihre Oberfläche eingeformt oder eingebracht ist. Einfach in der Herstellung ist es allerdings, wenn eine durchgängige Öffnung, beispielsweise in der Art einer Bohrung, vorgesehen ist.

Die Lagerbüchse kann auf ihrer dem umlaufenden Bauteil zugewandten Seite eine Schmiernut zur gleichmäßigen Verteilung des Schmiermittels über den gesamten Lagerumfang aufweisen. Vorzugsweise steht die Schmiernut über die Aussparung mit dem Verteilelement in Verbindung, so daß Schmiermittel von dem Verteilelement in die Schmiernut oder von dem Schmierkanal in die Schmiernut gelangen kann, je nachdem an welcher Stelle der Schmiermittelzufluß vorgesehen ist. Auf diese Weise kann der vorzugsweise in dem Schmierkanal vorgesehene Zufluß, das Schmiermittel zur Schmierung des umlaufenden Bauteils zuführen, ohne daß ein zusätzlicher Kanal notwendig ist.

Vorzugsweise erfolgt die Zufuhr des Schmiermittels durch das in dem Schmiermittelkanal vorgesehene Verteilelement, das mit dem Schmiersystem über zumindest eine Öffnung in seiner Wandung in Verbindung stehen kann. Auf diese Weise kann durch das Verteilelement Schmiermittel sowohl dem Zylinder und den sich darin bewegenden Kolben bzw. Kolbenböden und über das Kurbelwellenlager bzw. die Lagerbüchse der Kurbelwelle bzw. deren Laufflächen oder auch einem Pleuellager zugeführt werden.

Der dem Zylinder zugewandte Bereich des Verteilelements ist vorzugsweise in der Art einer Sprüheinrichtung/Sprühdüse ausgebildet bzw. weist eine solche auf. Diese kann Schmier- bzw. Kühlmittel in Bereiche des Zylinderblocks sprühen bzw. verteilen, so daß diese gleichmäßig mit Schmier-/Kühlmittel versorgt werden.

Es ist denkbar, daß die Zufuhr des Schmiermittels zu der Lagerbüchse durch Kanäle erfolgt, die sich auf dem Umfang des Verteilelements befinden. Besonders vorteilhaft ist es aber, wenn das Verteilelement bereichsweise hülsenartig ausgeführt ist, so daß ein Schmiermittelfluß in einem innenliegenden Kanal des Verteilelements erfolgen kann, wobei der Kanal einenends vorzugsweise in der Sprühdüse endet, wobei er sich verjüngen kann.

Öffnet sich das Verteilelement bzw. sein vorzugsweise innenliegender Kanal einenends in einen Zylinder der Kolbenmaschine, so kann es diesen über seine Verbindung mit dem Schmiersystem mit Schmier- bzw. Kühlflüssigkeit zur Kühlung und/oder Schmierung des Zylinderinnenraums bzw. seiner Wandung und/oder der in seinem Innern beweglich angeordneten Teilen wie dem Kolben und insbesondere den Kolbenböden, d.h. dem Bereich des Kolbens an dem beispielsweise eine Pleuelstange angreift, verbunden sein. Ist das Verteilelement in diesem Bereich als eine Sprüheinrichtung ausgeführt, so kann es den Schmiermittel- oder auch Kühlmittelzufluß auf die zu schmierende Region des Kolbens bzw. in den Zylinderinnenraum richten, verteilen bzw. dosieren.

Die Lagerbüchse kann einteilig ausgeführt sein. Vorzugsweise ist sie aber mehrteilig, insbesondere zweiteilig ausgebildet und besteht aus zwei Halblagern bzw. Lagerschalen.

Es ist denkbar, das Verteilelement aus einem metallischen Werkstoff, beispielsweise als ein Drehteil auszuführen. Besonders günstig und einfach in der Herstellung ist es, wenn das Verteilelement aus einem Kunststoffmaterial besteht. Eine Ausführung in Kunststoff ist möglich, da das Verteilelement in eingebautem Zustand nur geringen Belastungen ausgesetzt ist.

Verteilelemente, die zur Verwendung in einer Kolbenmaschine ausgebildet sind, sind sowohl für die Produktion einer solchen Kolbenmaschine wie auch als Ersatzteil verwendbar. Unter einer solchen Kolbenmaschine kann beispielsweise ein Kompressor oder ein Verbrennungsmotor verstanden werden.

In der Zeichnung ist ein nachfolgend näher beschriebenes Ausführungsbeispiel der Erfindung dargestellt. Es zeigt:

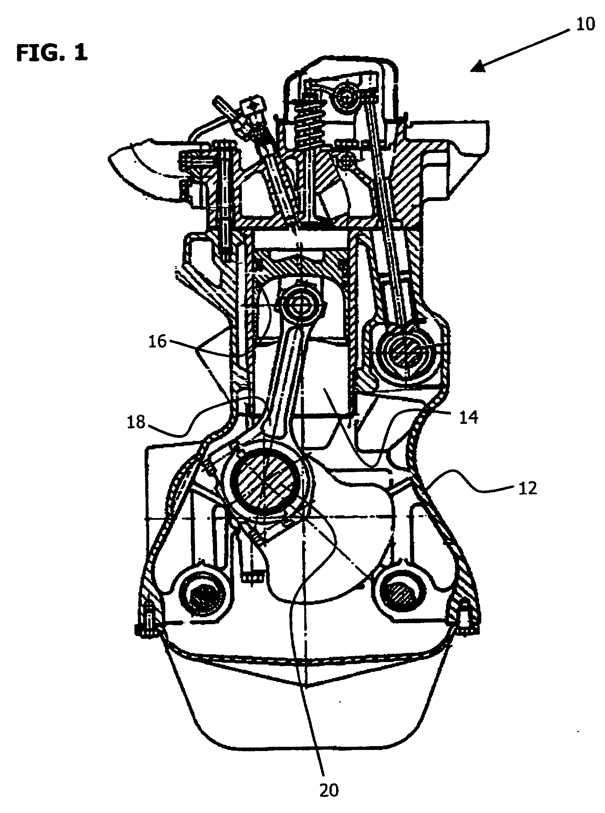

- Fig. 1: eine Schnittdarstellung einer erfindungsgemäßen Kolbenmaschine mit einem Zylinderblock und einer darin gelagerten Kurbelwelle im vertikalen Schnitt und
- Fig. 2: einen Schnitt durch eine Lagerbüchse mit einem Verteilelement in Längsrichtung der Kurbelwelle.

Da der Aufbau eines in üblicher Weise ausgeführten Verbrennungsmotors bzw. einer Kolbenmaschine 10 bekannt ist, soll im folgenden nur auf die wesentlichen Bestandteile eines solchen eingegangen werden. Die Kolbenmaschine 10 weist einen Zylinderblock 12 auf, in dem ein oder mehrere Zylinder 14 vorgesehen sind. In diesen Zylindern 14 sind Kolben 16 verschieblich angeordnet, die über Pleuelstangen 18, die an den Kolbenböden 19 angreifen, mit einer Kurbelwelle 20 in Verbindung stehen. Die Kurbelwelle 20 ist in dem Zylinderblock 12 über Kurbelwellenlager 24 drehbar gelagert, so daß sie durch die Bewegung des oder der Kolben 16 in Rotation versetzt werden kann, wobei die Kurbelwellenlager 24 durch geteilt ausgeführte Lagerbereiche 26, 28 des Zylinderblocks 12 gebildet werden.

In den Kurbelwellenlagern 24 sind Lagerbüchsen 29 vorgesehen, die geteilt ausgebildet sind und die jeweils zwei Lagerschalen 30, 32 aufweisen. In einem montiertem Zustand sind die Lagerschalen 30, 32 des Kurbelwellenlagers 24 zwischen den verschraubten Lagerbereichen 26, 28 derart verklemmt, daß keine Bewegung der Lagerbüchse 29 möglich ist. Zur Positionierung einer Lagerbüchse 29 bzw. ihrer Lagerschalen 30, 32 während der Montage sind Positionierhilfen notwendig, um ein Verdrehen bzw. Verschieben während des Einbaus zu verhindern, so daß ein korrekter Sitz und damit auch eine behinderungsfreie Schmiermittelzufuhr gewährleistet wird.

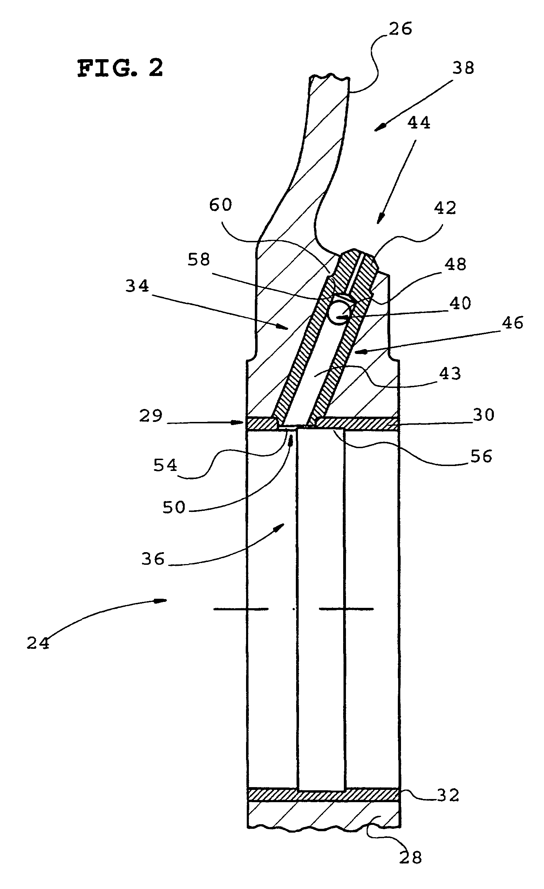

In dem oberen Lagerbereich 26, der einen festen Bestandteil des Zylinderblocks 24 bildet, ist ein Schmierkanal 34 vorgesehen. Dieser Schmierkanal 34 erstreckt sich von der dem Kurbelwellenlager 24 des Zylinderblocks 22 zugewandten Wandung 36 des Lagerbereichs 26 zu einer einem der Zylinder 14 zugewandten Wandung 38 des Lagerbereichs 26. Dieser Schmierkanal 34 steht über eine nur andeutungsweise gezeigte Öffnung 40 mit dem in Fig. 2 nur andeutungsweise gezeigten Schmiersystem der Kolbenmaschine 10 in Verbindung, so daß Schmiermittel in den Schmierkanal 34 gelangen kann.

In dem Schmierkanal 34 ist ein Verteilelement 42 vorgesehen. Dieses Verteilelement 42 ist als ein hülsenartiger Bauteil mit einem innenliegenden Kanal 43 ausgeführt, das an seinem im Einbauzustand dem Zylinder 14 zugewandten Endbereich eine Sprüheinrichtung 44 aufweist, in der sich der innenliegende Kanal 43 fortsetzt und wesentlich verjüngt. Der an die Sprüheinrichtung 44 angeschlossene Bereich 46 des Verteilelements 42 weist eine radiale Aussparung 48 auf, über die er mit dem Schmierkanal 34 und mit der Öffnung 40 in dem Schmierkanal 34 zu dem Schmiermittelsystem bzw. dem Schmiermittelsystem als solchem in Verbindung steht. Das Verteilelement 42 verjüngt sich in einem Bereich 50, der in eingebautem Zustand über die der Lagerbüchse 29 zugewandte Wandung 36 des Lagerbereichs 26 hinausragt, in dem dort eine geringere Wandstärke des hülsenartigen Bereichs 46 vorgesehen ist. Das Verteilelement 42 verjüngt sich auch im Bereich der Sprüheinrichtung 44, wobei dieser Bereich im montierten Zustand geringfügig über die Außenkontur des Lagerbereichs 26 übersteht und die Wandstärke in diesem Bereich stärker ist als in dem hülsenartigen Bereich 46.

Die im eingebauten Zustand und während der Montage an den Lagerbereich 26 angrenzende Lagerbüchse 29 bzw. ihre obere Lagerschale 30 weist eine Aussparung 54 in der Art einer Bohrung auf, die derart dimensioniert und ausgebildet ist, daß der verjüngte Bereich 50 des Verteilelements 42 in diese eingreifen kann, um die obere Lagerschale 30 und somit die gesamte Lagerbüchse 29, wie es noch genauer dargestellt wird, zu positionieren.

In beiden Lagerschalen 30, 32 ist darüber hinaus eine Schmiernut 56 vorgesehen, die sich um den gesamten inneren Umfang der Lagerbüchse 29 erstreckt, um das Schmiermittel gleichmäßig zu verteilen. Die Aussparung 48 mündet zumindest bereichsweise in diese Schmiernut 56. Daraus ergibt sich, daß über die Öffnung 40 im Zylinderblock 12 zu dem Schmiermittelsystem sowohl ein Schmiermittelzufluß über die Sprüheinrichtung 44 in den Zylinder 14 und zu dem Kolbenboden 19 wie auch in die Lagerbüchse 29 hinein möglich ist. Die Verteilung erfolgt über das Verteilelement 42, das darüber hinaus auch die Lagerbüchse 29 während der Montage positioniert.

Die Montage der Lagerbüchse 29 mit ihren Lagerschalen 30, 32 und der Kurbelwelle 20 in dem Zylinderblock erfolgt, indem zuerst das Verteilelement 42 von der der Kurbelwelle 20 zugewandten Wandung 36 des Lagerbereichs 26 aus in den Zylinderblock 12 eingebracht, vorzugsweise eingetrieben wird. Die Eintreibtiefe wird durch eine Begrenzungsschulter 58 begrenzt, die durch den Übergang des zylindrischen Bereichs 46 und der Sprüheinrichtung 44, deren Außendurchmesser differieren, gebildet wird und die mit einer entsprechend ausgebildeten Anlageschulter 60 in dem Lagerbereich 26 zur Anlage kommt. Das Verteilelement 42 weist in dem Zylinderblock 12 einen kraftschlüssigen Sitz auf. Es ist aber auch ein abweichendes Befestigen des Verteilelements 42 denkbar, wie beispielsweise ein Einschrauben über ein an dem Verteilelement 29 vorsehbares Außengewinde in ein in dem Schmierkanal 34 vorsehbares Gewinde, so daß ein formschlüssiger Sitz entsteht.

Im Anschluß wird die erste Lagerschale 30 in den Lagerbereich 26 eingebracht, wobei der Zylinderblock 12 zumindest zur Montage vorzugsweise derart angeordnet sein sollte, daß die Lagerschale 30 und auch weitere Bauteile, wie die Kurbelwelle 20, in den Lagerbereich 26 eingelegt werden können und nicht gehalten werden müssen. Zur Positionierung der Lagerschale 30 wird der verjüngte Bereich 50 des Verteilelements 42 in die Aussparung 54 in der Lagerschale 30 eingebracht, so daß sich diese bezogen auf den Lagerbereich 26 und damit den Zylinderblock 12 weder verdrehen noch verschieben kann. Nach dem Einlegen der ersten Lagerschale(n) 30 wird die Kurbelwelle 20 in diese eingelegt und danach die zweite(n) Lagerschale(n) 32 eingebracht, wobei deren Position und damit die Position der gesamten Lagerbüchse 29 durch das Verteilelement 42 über die erste Lagerschale 30 und die darin eingelegte Kurbelwelle 20 bestimmt wird.

Abschließend wird der zweite Lagerbereich 28, der in der Art eines oder mehrerer deckelartiger Bauteile ausgeführt sein kann, mit dem Zylinderblock verbunden, vorzugsweise verschraubt, so daß die Lagerbüchse 29 bzw. ihre Lagerschalen 30, 32 in dem Zylinderblock kraftschlüssig verklemmt werden und auf das Verteilelement durch den Betrieb der Kolbenmaschine keine oder nur geringe Kräfte aufgebracht werden.

Das Verteilelement 42 kann in kostengünstiger und einfacher Weise aus einem Kunststoffmaterial hergestellt werden. Abgesehen vom Vorgang des Einbauens ist das Verteilelement 42 keinen größeren mechanischen Belastungen ausgesetzt, da die Lagerbüchse 29 während des Betriebs über die vorzugsweise verschraubten Lagerbereiche 26, 28 des Zylinderblocks 12 verklemmt wird. Es ist aber auch denkbar, die Verteileinrichtung 42 als einen aus Metall gefertigten Bauteil, beispielsweise in der Art eines Drehteils vorzusehen.

## Patentansprüche

1. Kolbenmaschine (10) mit einem Zylinderblock (12), einer in dem Zylinderblock (12) gelagerten Kurbelwelle (20), zumindest einer Lagerbüchse (29) und einem Schmiersystem, das mit der Lagerbüchse (29) über zumindest einen ein Verteilelement (42) aufweisenden Schmierkanal (34) in Verbindung steht, **dadurch gekennzeichnet, daß** das Verteilelement (42) die Lagerbüchse (29) positioniert.

2. Kolbenmaschine nach Anspruch 1, **dadurch gekennzeichnet, daß** in der Lagerbüchse (29) eine Ausnehmung bzw. Aussparung (54) vorgesehen ist, mit der das Verteilelement (42) zusammenwirken kann.

3. Kolbenmaschine nach einem oder mehreren der vorherigen Ansprüche, **dadurch gekennzeichnet, daß** die Lagerbüchse (29) eine Schmiernut (56) aufweist, die vorzugsweise über die Aussparung (54) mit dem Verteilelement (42) in Verbindung steht.

4. Kolbenmaschine nach einem oder mehreren der vorherigen Ansprüche, **dadurch gekennzeichnet, daß** das Verteilelement (42) wenigstens eine Öffnung (40) aufweist, über die es vorzugsweise über einen innenliegenden Kanal (43), mit dem Schmiersystem in Verbindung steht.

5. Kolbenmaschine nach einem oder mehreren der vorherigen Ansprüche, **dadurch gekennzeichnet, daß** das Verteilelement (42) zumindest eine Sprüheinrichtung (44), vorzugsweise in der Art einer Sprühdüse, aufweist.

6. Kolbenmaschine nach einem oder mehreren der vorherigen Ansprüche, **dadurch gekennzeichnet, daß** sich das Verteilelement (42) einenends, vorzugsweise über die Sprüheinrichtung (44), in einen Zylinder (14) der Kolbenmaschine (10) öffnet.

7. Kolbenmaschine nach einem oder mehreren der vorherigen Ansprüche, **dadurch gekennzeichnet, daß** die Lagerbüchse (29) mehrteilig, vorzugsweise zweiteilig, insbesondere in der Art von Lagerschalen (30, 32), ausgeführt ist.

8. Kolbenmaschine nach einem oder mehreren der vorherigen Ansprüche, **dadurch gekennzeichnet, daß** das Verteilelement (42) aus einem Kunststoffmaterial besteht.

9. Verteilelement (42) mit einem vorzugsweise innenliegenden Kanal (43), einer Aussparung (48) zur Zufuhr von Schmiermittel und einem Bereich (50) zum Eintreten in eine Lagerbüchse (29) zur deren Positionierung, insbesondere zur Verwendung in einer Kolbenmaschine (10) nach einem oder mehreren der Ansprüche 1 bis 8.

## Claims

1. A piston engine (10) with a cylinder block (12), a crankshaft (20) journalled in the cylinder block (12), at least one bearing bush (29) and a lubricating system which is in communication with the bearing bush (29) through at least one lubricating channel (34) having a distributor element (42), **characterized in that** the distributor element (42) positions the bearing bush (29).

2. A piston engine according to claim 1, **characterized in that** a recess or pocket (54) with which the distributor element (42) can cooperate is provided in the bearing bush (29).

3. A piston engine according to one or more of the preceding claims, **characterized in that** the bearing bush (29) has a lubricant groove (56) which is preferably in communication with the distributor element (42) via the pocket (54).

4. A piston engine according to one or more of the preceding claims, **characterized in that** the distributor element (42) has at least one opening (40) through which it is communication with the lubricating system, preferably via an internal channel (43).

5. A piston engine according to one or more of the preceding claims, **characterized in that** the distributor element (42) comprises at least one spray device (44), preferably in the nature of a spray nozzle.

6. A piston engine according to one or more of the preceding claims, **characterized in that** the distributor element (42) opens at one end into a cylinder (14) of the piston engine (10), preferably via the spray device (44).

7. A piston engine according to one or more of the preceding claims, **characterized in that** the bearing bush (29) is of multi-part, preferably two-part, form, especially in the nature of bearing shells (30, 32).

8. A piston engine according to one or more of the preceding claims, **characterized in that** the distributor element (42) consists of plastics material.

9. A distributor element (42) with a preferably internal channel (43), a recess (48) for the supply of lubricant and a region (50) for entry into a bearing bush (29) to position the latter, especially for use in a piston engine (10) according to one or more of claims 1 to 8.

## Revendications

1. Machine à piston (10) avec un corps cylindrique (12), un vilebrequin (20) logé dans le corps cylindrique (12), au moins un coussinet (29) et un système de lubrification, qui communique avec le coussinet (29) par l'intermédiaire d'au moins un canal de lubrification (34) présentant un élément de distribution (42), **caractérisée en ce que** l'élément de distribution (42) positionne le coussinet (29).

2. Machine à piston selon la revendication 1, **caractérisée en ce que** dans le coussinet (29) est prévu un évidement ou un creux (54) avec lequel coopère l'élément de distribution (42).

3. Machine à piston selon une ou plusieurs des revendications précédentes, **caractérisée en ce que** le coussinet (29) comporte une rainure de lubrification (56), qui est de préférence en liaison avec l'élément de distribution (42) par l'intermédiaire du creux (54).

4. Machine à piston selon une ou plusieurs des revendications précédentes, **caractérisée en ce que** l'élément de distribution (42) comporte au moins une ouverture (40) au moyen de laquelle ledit élément de distribution est en liaison avec le système de lubrification par l'intermédiaire d'un canal intérieur (43).

5. Machine à piston selon une ou plusieurs des revendications précédentes, **caractérisée en ce que** l'élément de distribution (42) comporte au moins un dispositif de pulvérisation (44), de préférence de type buse de pulvérisation.

6. Machine à piston selon une ou plusieurs des revendications précédentes, **caractérisée en ce que** l'élément de distribution (42) s'ouvre sur une extrémité, de préférence par l'intermédiaire du dispositif de pulvérisation (44), dans un cylindre (14) de la machine à piston (10).

7. Machine à piston selon une ou plusieurs des revendications précédentes, **caractérisée en ce que** le coussinet (29) est réalisé en plusieurs parties, de préférence en deux parties, en particulier sous forme de coquilles de coussinet (30, 32).

8. Machine à piston selon une ou plusieurs des revendications précédentes, **caractérisée en ce que** l'élément de distribution (42) est réalisé en matière plastique.

9. Élément de distribution (42) comportant un canal (43) de préférence interne, un creux (48) pour l'admission du lubrifiant et une zone (50) pour l'introduction dans un coussinet (29) en vue du positionnement de celle-ci, en particulier destiné à être utilisé dans une machine à piston (10) selon l'une quelconque des revendications 1 à 8.
